# EUROPEAN PATENT SPECIFICATION

(11) **EP 0 565 944 B1**
(45) Date of publication and mention of the grant of the patent: **19.06.1996**
(21) Application number: 93105308.6
(22) Date of filing: 31.03.1993
(51) Int. Cl.: B60C 15/06

(54) **Pneumatic radial tire having two nonmetallic chippers**
Radialer Luftreifen mit zwei nichtmetallischen Wulstverstärkungsschichten
Bandage pneumatique radial possédant deux couches de renfort non-métalliques aux talons

(30) Priority: 06.04.1992 US 864249; 08.09.1992 US 941616
(43) Date of publication of application: 20.10.1993
(73) Proprietor: THE GOODYEAR TIRE & RUBBER COMPANY, Akron, Ohio 44316-0001 (US)
(72) Inventor: Gabor, Jennifer Leigh, Cuyahoga Falls, Ohio 44221 (US); Nelson, Robert Bernard, Wadsworth, Ohio 44281 (US)
(74) Representative: Leitz, Paul

(56) References cited:
- EP-A- 0 375 443
- DE-A- 3 942 231
- FR-A- 2 483 854
- FR-A- 2 654 988
- US-A- 4 700 764

## Description

### Background of the Invention

The present invention relates to radial pneumatic tires and more specifically a radial pneumatic tire having two chippers comprised of nonmetallic reinforced plies.

Typically, radial city bus tires are subjected to high brake heat causing bead area durability problems. Failure in the bead area is attributed to the heat conducting properties of the metal cords in the bead area. Unfortunately, simple substitution of less heat conducting materials in place of this metal cord has not been successful because such materials do not exhibit the high strength properties of metal cords needed for the bead area. Therefore, there exists a need for a tire construction which decreases the bead area durability problems caused by heat and provides sufficient reinforcement in the bead area.

FR-A-2 483 854 discloses a tire according to the preamble of claim 1 having two reinforcement layers of non-metallic cords in the bead portion.

US-A-4 700 764 relates to heavy duty pneumatic radial tires having a main chafer of polyamide fiber cords and an auxiliary chafer of at least two cord layers covering the outside of the main chafer.

### Summary of the Invention

The present invention relates to a pneumatic tire as recited in claim 1. Preferred embodiments of the invention are recited in the dependent claims.

### Brief Description of the Drawings

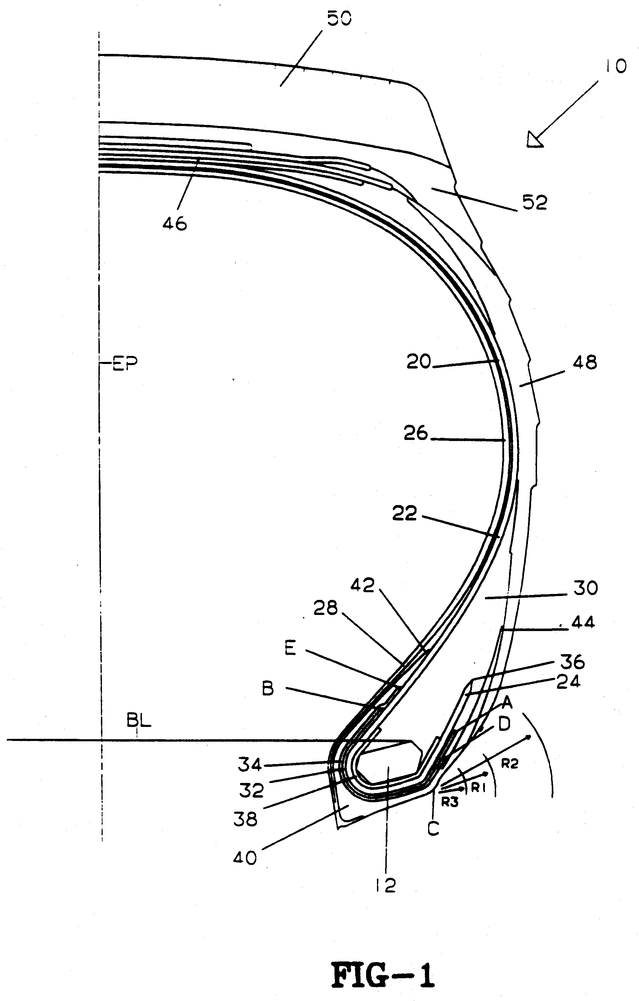

Figure 1 is a radial cross-sectional view of a tire according to the present invention.

### Detailed Description of the Invention

The present invention may be better understood in the context of the following definitions which are applicable both to the specification and to the appended claims:
"Air-impermeable rubber" means a rubber having an air-permeability less than 40% the air permeability of natural rubber. "Air-permeable rubber" means any rubber that is not air-impermeable. Both air-impermeable and air-permeable rubbers can be reinforced.

"Aramid" means an aromatic polyamide. Aramid fibers generally have tensile strengths ranging from about 2.5 to 3.8 GPa and tensile modulus values ranging from about 50 to 170 Gpa.

"Axial" and "axially" are used herein to refer to lines or directions that are parallel to the axis of rotation of the tire.

"Bead" means that part of the tie comprising an annular tensile member wrapped by ply cords and shaped.

"Bead line" means the plane perpendicular to the equatorial plane and passing between the top of each bead.

"Belt structure" means at least two layers or plies of parallel cords, woven or unwoven, underlying the tread, unanchored to the bead, and having both left and right cord angles in the range from 17 degrees to 27 degrees with respect to the equatorial plane of the tire.

"Butyl rubber" means rubber produced by copolymerizing isobutylene with small amounts of isoprene.

"Carbon fiber" is a high tensile fiber made from isotropic pitch, anisotropic pitch, rayon or polyacrylonitrile. The carbon fiber may have an amorphous structure which is resistant to acids and bases or a polycrystalline structure. Typical tensile modulus for carbon fibers range from 75 GPa to 650 GPa. Typical tensile strength values range from 1 GPa to 7 GPa.

"Halobutyl rubber" means halogenated butyl rubber, such as with chlorine or bromine.

"Casing" means the tire structure except the tread.

"Carcass" means the tire structure apart from the belt structure, tread, undertread, and sidewall rubber over the plies, but including the beads.

"Circumferential line" means a line tangent to the circle defined by a bead of the tire.

"Cord" means one of the reinforcement strands of which the plies in the tire are comprised.

"Cord angle", for a cord that crosses the equatorial plane, means the acute angle, left or right in a plan view of the tire, formed by a cord with respect to the equatorial plane. If the cord does not cross the equatorial plane, the "cord angle" means the acute angle formed by the cord with a circumferential line (circle) in the ply. The circumferential line passes through the point at which the "cord angle" is to be measured and is contained in a plane parallel with the equatorial plane. The "left" or "right" orientation of a cord not passing through the equatorial plane is determined by what the orientation would be were the cord to extend across such angle while remaining in the tire. The "cord angle" is measured in a cured but uninflated tire.

"Equatorial plane (EP)" means the plane perpendicular to the tire's axis of rotation and passing through the center of its tread.

"Liner" means the layer or layers of elastomer or other material that form the inside surface of a tubeless tire and that contain the inflating fluid within the tire.

"Nylon" is a polyamide polymer characterized by the presence of amide groups -CONH. Representative examples include nylon-66 and nylon-6. Nylon fibers generally have tensile strengths ranging from about 0.8 GPa to 1.8 GPa and tensile modulus values ranging from about 10 GPa to 15 GPa.

"Ply", unless otherwise specified, means a continuous layer of rubber-coated parallel cords.

"Polyester" is a condensation polymer that is derived from a diol and a dicarboxylic acid wherein at least 90% of the dicarboxylic acid is terephthalic acid, naphthenic acid or mixtures thereof. Polyester fibers generally have tensile strengths ranging from about 0.8 GPa to 1.8 GPa and tensile strength values ranging from about 10 GPa to 15 GPa.

"Pneumatic tire" means a laminated mechanical device of generally toroidal shape (usually an open-torus) having beads and a tread and made of rubber, chemicals, fabric and steel or other materials. When mounted on the wheel of a motor vehicle, the tire through its tread provides traction and contains the fluid that sustains the vehicle load.

"Radial" and "radially" are used to mean directions radially toward or away from the axis of rotation of the tire.

"Rayon" is a semicrystalline fiber composed of regenerated cellulose including regenerated cellulose in which substituents have replaced not more than 15% of the hydrogens of the hydroxyl groups. Rayon fibers generally have tensile strengths ranging from about 0.5 GPa to 1.6 GPa and tensile modulus values ranging from about 30 GPa to 60 GPa.

"Sidewall" means that portion of a tire between the tread and the bead.

"Tread" means a molded rubber component which when bonded to a tire casing, includes that portion of the tire that comes into contact with the road when the tire is normally inflated and under normal load.

In Fig. 1, there is illustrated a pneumatic tire 10 constructed in accordance with the present invention. The tire 10 has a pair of axially-spaced apart annular tensile members or beads 12. The beads are shown as wire filaments arranged in a hexagonal cross-section but this not believed to be essential to the invention and the beads could have been circular or of other well known cross-sections or could be manufactured of cables or other materials.

A circumferentially extending radially superimposed carcass ply 20 extends continuously between the beads 12. Each carcass ply has a central portion 22 disposed between the beads. Lateral edge portion 24 of the carcass ply is folded axially and radially outward around the respective beads. The lateral edge portion 24, also known as the carcass ply turn-up may extend anywhere from the point after which it is folded axially and radially outward around the bead 12 to a point ending at the belt structure 46. Steel is the preferred reinforcement for the carcass ply. The cords of the carcass ply are oriented at angles between 65° and 90° with respect to the equatorial plane (EP) of the tire. It is contemplated herein that more than one carcass ply such as two may be used. Preferably, the cords in the carcass ply 20 are oriented at 80° to 90° and if a second carcass ply is used, they are also oriented at 80° to 90°.

A liner 26 is disposed radially inwardly of the carcass ply 20. The edges 28 of the liner are disposed radially inwardly of the beads 12. The liner 26 is made of an air-impermeable material which offers high resistance to air permeation and can withstand levels of flexing in the sidewall area. The preferred material is a halobutyl rubber. Halobutyl rubber, whether chlorobutyl or bromobutyl, has proven to be more air-impermeable than natural or styrene butadiene rubber.

An apex 30 may be disposed between each bead 12 in the central portion 22 and the lateral edge portion 24 of the carcass ply 20. The apex 30 preferably is unreinforced and is made of a resilient material. It acts as a stress transition component to disperse the stresses at the carcass ply ends and at the end of each chipper 32, 34. The apex also provides stiffness and stability in the lower sidewall area. Apexes can be made of stiffer material if a higher degree of lateral stiffness is required.

The pneumatic tire 10 of the present invention is characterized by having a first 32 and second 34 chipper. Each chipper 32, 34 is a nonmetallic cord reinforced ply which "insulates" the bead area from the high heat environment in which the tire is used. Representative of the nonmetallic materials include aramid, carbon fibers, nylon, polyester and rayon. For the purposes of the present invention, any nonmetallic cord material which has less heat conducting properties than steel but sufficient strength to be used in a chipper may be used. Preferably, the cord material is aramid or nylon. The most preferred chippers 32, 34 are made of aramid strands of aramid denier cord twisted together to form a single cord. The nonmetallic cord is arranged in a density (end count) equal to about 5 to about 50 cords per inch. Preferably, the cord is arranged in a density (end count) equal to about 15 to 20 cords per inch. The cord angle of the chippers may range from about 19° to about 40° with respect to the circumferential line. Preferably, the cord angle of the cords in the chippers range from 20° to 35°. The cords of the first and second chippers are oriented in opposite manners with respect to the circumferential line of the tire. The first 32 and second 34 chippers are adjacent to the carcass ply 22 which goes around the bead 12 innermost to the bead 12. The first chipper extends from a first end point located on the axially outer surface of the carcass ply 22 such as indicated by "A". The first chipper 32 continues around the bead 12 to above the bead line "BL" to an axially inner position from end point "A" located on the axially inner surface of the carcass ply 22 as indicated by "B". The end point "A" is located on a radius R₁ which is between the bead heel and 99% of the radius R₂ to the carcass ply end 36, both radii being struck from the heel of the bead portion, as indicated by point "C". Preferably, the first end point "A" of first chipper 32 is located on a radius R₁ which is from 25 to 80% of the radius R₂ to the carcass ply end 36. A particularly preferred percentage is from 35% to 65%. End point "B" is located above the bead line "BL". Preferably, the second end point of each chipper terminates below or does not extend beyond the ply ending 36. Similar to the first chipper 32, the second chipper 34 extends from a first end point located on the axially outer side of the carcass ply 22 as indicated by end point "D". The second chipper 34 continues around the bead 12, to an axially inner position from end point "D" located above the bead line "BL" in the axially inner surface of the carcass 22 as indicated by end point "E". The end point "D" is located on a radius R₃ which is between the bead heel and 99% of the radius R₂ to the carcass ply end 36, both radii being struck from "C". Whereas both ends A and D must fall within the region from the bead heel and the above percentage of the radius R₂, each first end point A, D should be a different distance from the bead heel C. Stated another way, the end points A, D of the two chippers 32 and 34 are staggered in their distance from the bead heel C. As shown in Fig. 1, it is preferred, but not required that the first end point A of the inner chipper be longer from the bead heel point C than the first end point D of the outer chipper 34 from point C. Inner chipper, as referred to herein, relates to the chipper closest to the bead. Outer chipper is the chipper that is on the opposite side of the bead from the inner chipper. From the bead heel C, the distance to the first end point D of the shorter chipper should be from about 40% to about 80% of the distance from the bead heel C to the first end point A of the longer chipper. Preferably, the percentage ranges from about 50 to about 70 percent. The second end points B and E of chippers 32 and 34 should be at a different distance above the bead line. As shown in Fig. 1, it is preferred but not required that the second end point E of the outer chipper 34 be a greater distance above the bead line than the distance between the second end point B of the inner chipper 32 and the bead line. From the bead line, the distance to the second end point B of the shorter chipper 32 should be from about 40 to about 80 percent of the distance from the bead line to the second end point of the longer chipper. Preferably, the percentage ranges from about 50 to about 70.

An essential aspect of the present invention is a tire having a first and second chipper as described above. If a tire has been constructed having such first and second chippers, it is contemplated herein that supplemental reinforcement or heat shielding devices may be used, such as additional chippers or flippers.

The flipper 38 may be a reinforced ply or gum strip which locks the beads 12 to the apex 30 and provide rigidity to the lower bead and sidewall area. The flipper 38 can be reinforced with a cord material like that used for the chippers 32, 34 or a square woven material can instead be used. The reinforcement may be made of aramid, rayon, nylon and polyester or other such reinforcing materials. The use of a flipper 38 is not believed to be necessary to practice the invention. In the preferred embodiment, a gum strip is used as a flipper.

The gum chafer 40 is formed of an unreinforced, gum located in the bead area of the tire and disposed between the liner 26 and the chippers 32, 34. The first edge 42 of the gum chafer 40 extends from a point radially outward in axially of one of the beads 12 to a second edge 44 disposed axially outwardly of the beads.

A belt structure 46 comprises a plurality of belt plies of the type well known in the art. The belt structure 46 is disposed radially outwardly of the carcass ply 20. Each of the belt plies is generally of the same construction. The belt plies are preferably reinforced with cords made of steel. The cord angle for the cords in the belt range from 16° to 28°. Preferably, the cord angle ranges from about 18° to 20°.

The sidewalls 48 of the tire 10 include outer elastomeric portions that extend radially inwardly from the belt structure 46 and the tread 50 to the bead portions of the tire. The sidewall is generally unreinforced and is manufactured of a rubber designed to resist chemical reactions to oxygen, ozone and sunlight and must be resilient and flexible to withstand the flexing of the tire under normal operating conditions. The tread 50 is made of an abrasion-resistant rubber designed to provide good wear and traction properties throughout the life of the tire. The tread is preferably grooved and formed with a tread design directed to optimizing traction and wear.

A tread skirt 52 is disposed between the lateral edges of the tread 50 and the sidewall 48. The tread skirt is reinforced and is made of a rubber design to withstand a high degree of scuffing and flexing.

The present invention can best be understood by review of the following claims.

## Claims

1. A pneumatic tire (10) having:
(a) a pair of axially spaced apart beads (12), each having a core;
(b) one or more continuous carcass plies (20) extending between the beads, each carcass ply (20) comprising steel cords and each carcass ply (20) having a central portion (22) and lateral edge portions (24), each lateral edge portion (24) being folded axially and radially outwardly around one of said beads (12);
(c) a belt structure (46) comprising a plurality of belt plies reinforced with steel or aramid cords disposed radially outward of the carcass plies (20);
(d) a first and second chipper (32,34) which reinforce each bead (20) and each chipper (32,34) comprising a nonmetallic cord reinforced ply having two points, characterized in that
each chipper (32,34) extends from a first end point (A,D) located on the axially outer side of the carcass ply (20) at a radial distance from the bead heel (C) of 35% to 65% of the radial distance of the carcass ply end (36) from said bead heel (C), said first end point of one chipper (R₃) to the bead heel (C) being from 40% to 80% of the distance from the bead heel (C) to the first end point of the other chipper (R₁); and in that
each of said chippers (32,34) extends around the bead (12) to a second end point (B,E) located on the axially inner surface of the carcass ply (20) above the bead line (BL), said second end point of one chipper (B) on the axially inner surface being located at a different distance above said bead line (BL) than the distance above said bead line (BL) to the second end point of the other chipper (E).

2. The pneumatic tire (10) of claim 1 characterized in that the distance from said second end point (B) of said first chipper (32) to the bead line is from 40% to 80% of the distance from the bead line (BL) to the second end point (E) of said second chipper (34).

3. The pneumatic tire (10) of claim 1 characterized in that the cord angle of said first and second chipper ranges from 19° to 40° with respect to the circumferential line of the tire.

4. The pneumatic tire (10) of claim 1 characterized in that said nonmetallic cord is selected from the group consisting of aramid, carbon fiber, nylon, polyester and rayon.

5. The pneumatic tire (10) of claim 1 characterized in that said first end point (A) of the inner chipper (32) is a longer distance from the bead heel (C) than the distance between the first end point (D) of the outer chipper (34) to the bead heel (C).

6. The pneumatic tire (10) of claim 1 characterized in that the cord angle for the cords in the belt structure range from 16° to 28°.

## Patentansprüche

1. Luftreifen (10) mit:
(a) einem Paar von axialwärts beabstandeten Wülsten (12) mit jeweils einem Kern;
(b) einer oder mehreren kontinuierlichen Karkassenschichten (20), welche sich zwischen den Wülsten erstrecken, wobei jede Karkassenschicht (20) Stahlkorde umfaßt und jede Karkassenschicht (20) einen mittleren Abschnitt (22) und Lateralkantenabschnitte (24) aufweist, wobei jeder Lateralkantenabschnitt (24) axialwärts und radialwärts nach außen um eine der Wülste (12) gefaltet ist;
(c) einer Gürtelstruktur (46), umfassend eine Vielzahl von Gürtelschichten, welche mit Stahl- oder Aramidkorden verstärkt sind, radialwärts außerhalb der Karkassenschichten (20) angeordnet;
(d) einem ersten und einem zweiten Wulstverstärker (32, 34), welche jede Wulst (20) verstarken, wobei jeder Verstärker (32, 34) eine nichtmetallische, kordverstärkte Schicht mit zwei Punkten enthält, dadurch gekennzeichnet, daß sich jede Wulstverstärkung (32, 34) erstreckt von einem ersten Endpunkt (A, D), welcher sich an der axialwärts äußeren Seite der Karkassenschicht (20) bei einem radialen Abstand von dem Wulstabsatz (C) von 35% bis 65% des radialen Abstandes des Karkassenschichtendes (36) von dem Wulstabsatz (C) befindet, wobei der erste Endpunkt der einen Verstärkung (R₃) zu dem Wulstabsatz (C) von 40% bis 80% des Abstandes von dem Wulstabsatz (C) zu dem ersten Endpunkt der anderen Verstärkung (R₁) beträgt; und daß sich jede der Verstärkungen (32, 34) um die Wulst (12) zu einem zweiten Endpunkt (B, E) erstreckt, welcher sich an der axial inneren Fläche der Karkassenschicht (20) über der Wulstlinie (BL) befindet, wobei der zweite Endpunkt von einer Wulstverstärkung (B) an der axial inneren Fläche bei einem anderen Abstand über der Wulstlinie (BL) angeordnet ist als dem Abstand oberhalb der Wulstlinie (BL) zu dem zweiten Endpunkt der anderen Wulstverstärkung (E).

2. Luftreifen (10) nach Anspruch 1, dadurch gekennzeichnet, daß der Abstand von dem zweiten Endpunkt (B) der ersten Wulstverstärkung (32) zu der Wulstlinie zwischen 40% und 80% des Abstandes beträgt von der Wulstlinie (BL) zu dem zweiten Endpunkt (E) der zweiten Wulstverstärkung (34).

3. Luftreifen (10) nach Anspruch 1, dadurch gekennzeichnet, daß der Kordwinkel der ersten und der zweiten Wulstverstärkung zwischen 19° und 40° mit Bezug auf die umfängliche Linie des Reifens liegt.

4. Luftreifen (10) nach Anspruch 1, dadurch gekennzeichnet, daß der nichtmetallische Kord ausgewählt ist aus der Gruppe, bestehend aus Aramid, Kohlenstoffaser, Nylon, Polyester und Rayon.

5. Luftreifen (10) nach Anspruch 1, dadurch gekennzeichnet, daß der erste Endpunkt (A) der inneren Wulstverstärkung (32) einen längeren Abstand von dem Wulstabsatz (C) aufweist als den Abstand zwischen dem ersten Endpunkt (D) der äußeren Wulstverstärkung (34) zu dem Wulstabsatz (C).

6. Luftreifen (10) nach Anspruch 1, dadurch gekennzeichnet, daß der Kordwinkel für die Korde in der Gürtelstruktur zwischen 16° und 28° liegt.

## Revendications

1. Bandage pneumatique (10) comportant :
(a) une paire de talons (12) espacés l'un de l'autre en direction axiale, comportant chacun une tringle de talons;
(b) une ou plusieurs nappes de carcasse continues (20) s'étendant entre les talons, chaque nappe de carcasse (20) comprenant des câblés en acier et chaque nappe de carcasse (20) comportant une portion centrale (22) et des portions de bords latéraux (24), chaque portion de bord latéral (24) étant repliée en direction axiale et en direction radiale vers l'extérieur autour d'un desdits talons (12);
(c) une structure de ceinture (46) comprenant plusieurs nappes de ceinture renforcées par des câblés en acier ou en aramide disposés en direction radiale à l'extérieur des nappes de carcasse (20);
(d) des première et seconde bandelettes (32, 34) qui renforcent chaque talon (20), chaque bandelette (32, 34) comprenant une nappe renforcée par des câblés non métalliques possédant deux points, caractérisé en ce que
chaque bandelette (32, 34) s'étend depuis un premier point terminal (A, D) situé sur le côté externe en direction axiale de la nappe de carcasse (20) à une distance radiale du bout de talon (C) représentant de 35% à 65% de la distance radiale de l'extrémité de nappe de carcasse (36) par rapport audit bout de talon (C), la distance s'étendant entre ledit premier point terminal de la première bandelette (R₃) au bout de talon (C) représentant de 40% à 80% de la distance s'étendant entre le bout de talon (C) et le premier point terminal de l'autre bandelette (R₁); et en ce que
chacune desdites bandelettes (32, 34) s'étend autour du talon (12) jusqu'à un second point terminal (B, E) situé sur la surface interne en direction axiale de la nappe de carcasse (20) au-dessus de la ligne de talons (BL), ledit second point terminal de la première bandelette (B) sur la surface interne en direction axiale étant situé à une distance au-dessus de ladite ligne de talons (BL) différente de la distance au-dessus de ladite ligne de talons (BL) au second point terminal de l'autre bandelette (E).

2. Bandage pneumatique (10) selon la revendication 1, caractérisé en ce que la distance par rapport audit second point terminal (B) de ladite première bandelette (32) à la ligne de talons représente de 40% à 80% de la distance s'étendant entre la ligne de talons (BL) et le second point terminal (E) de la dite seconde bandelette (34).

3. Bandage pneumatique (10) selon la revendication 1, caractérisé en ce que l'angle formé par les câblés desdites première et seconde bandelettes se situe dans le domaine de 19° à 40° par rapport à la ligne circonférentielle du pneumatique.

4. Bandage pneumatique (10) selon la revendication 1, caractérisé en ce que ledit câblé non métallique est choisi parmi le groupe constitué par l'aramide, les fibres de carbone, le nylon, le polyester et la rayonne.

5. Bandage pneumatique (10) selon la revendication 1, caractérisé en ce que la distance séparant ledit premier point terminal (A) de la bandelette intérieure (32) et le bout de talon (C) est supérieure à la distance s'étendant entre le premier point terminal (D) de l'autre bandelette (34) et le bout de talon (C).

6. Bandage pneumatique (10) selon la revendication 1, caractérisé en ce que l'angle formé par les câblés dans la structure de ceinture se situe dans le domaine de 16° à 28°.
